(19) Europäisches Patentamt / European Patent Office / Office européen des brevets

(11) **EP 3 333 393 B1**

(12) **FASCICULE DE BREVET EUROPEEN**

(45) Date de publication et mention de la délivrance du brevet:
**08.04.2020 Bulletin 2020/15**

(51) Int Cl.:
*F02C 9/18* *(2006.01)*  *F02C 9/50* *(2006.01)*
*F02C 7/32* *(2006.01)*

(21) Numéro de dépôt: **17205590.7**

(22) Date de dépôt: **06.12.2017**

(54) **PROCÉDÉ ET DISPOSITIF DE CONTRÔLE DES PRÉLÈVEMENTS SUR UNE TURBOMACHINE LIMITANT LE RISQUE DE POMPAGE PAR ÉCHANGE D'INFORMATIONS ENTRE UN GESTIONNAIRE D'ÉNERGIE ET UN SYSTÈME DE CONTRÔLE DE LA TURBOMACHINE**

VERFAHREN UND VORRICHTUNG ZUR KONTROLLE DER ENTNAHMEN AUS EINER TURBOMASCHINE ZUR BEGRENZUNG DES PUMPRISIKOS DURCH INFORMATIONSAUSTAUSCH ZWISCHEN EINEM ENERGIEMANAGER UND EINEM REGELUNGSSYSTEM DER TURBOMASCHINE

METHOD AND DEVICE FOR CONTROLLING EXTRACTIONS FROM A TURBINE ENGINE TO REDUCE THE RISK OF SURGING BY INFORMATION EXCHANGE BETWEEN AN ENERGY MANAGER AND A SYSTEM FOR CONTROLLING THE TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2016 FR 1661991**

(43) Date de publication de la demande:
**13.06.2018 Bulletin 2018/24**

(73) Titulaires:
• **Airbus Operations GmbH**
  **21129 Hamburg (DE)**
• **Airbus Operations**
  **31060 Toulouse (FR)**

(72) Inventeurs:
• **BARKOWSKY, Jan**
  **19057 Schwerin (DE)**

• **ROUX, Paul-Emile**
  **31300 Toulouse (FR)**
• **DUFFAU, Laurent**
  **31280 Mons (FR)**
• **GARCIA, Thierry**
  **31490 Brax (FR)**
• **RENARD, Charles**
  **31120 Goyrans (FR)**

(74) Mandataire: **Santarelli**
  **49, avenue des Champs-Elysées**
  **75008 Paris (FR)**

(56) Documents cités:
EP-A1- 2 955 334      EP-A2- 0 980 980
WO-A1-2016/020618      US-A- 4 606 191
US-B1- 8 459 038

## Description

La présente invention concerne le domaine des turbomachines et de leur contrôle. Elle porte en particulier sur le contrôle des groupes propulseurs équipant certains aéronefs équipés de turbomachines.

Elle s'applique notamment aux turboréacteurs et turbopropulseurs (y compris à soufflante non carénée, généralement désignés par les expressions anglophones « open rotors » ou « propfans ») pouvant être employés pour la propulsion des aéronefs. Les turbopropulseurs se distinguent des turboréacteurs par la présence de pâles d'hélices non carénées. Les turboréacteurs à soufflante, ou « turbofan » selon l'expression anglophone, comportent une soufflante carénée agissant comme une hélice. L'invention s'applique notamment à ces types de turbomachines.

Les turbomachines de propulsion des aéronefs peuvent également être simplement désignées par le terme « moteur ». Dans le présent document, le terme moteur correspond ainsi à une turbomachine pour la propulsion d'un aéronef.

Ces turbomachines mettent en œuvre une ou plusieurs turbines à gaz récupérant l'énergie produite dans une chambre de combustion alimentée en air par un ou plusieurs compresseurs.

Un phénomène connu pouvant survenir au niveau d'un compresseur lors du fonctionnement des turbomachines est le phénomène appelé « pompage ». Ce phénomène est expliqué ci-après par l'exemple d'un turboréacteur de groupe propulseur d'aéronef, mais est identique dans un turbopropulseur (ou de manière générale dans tout compresseur de turbomachine).

Le phénomène de pompage correspond à un décrochage aérodynamique des ailettes d'un compresseur.

Il correspond à une tendance de la zone à haute pression d'un compresseur à refouler vers la zone à basse pression. Cela entraine une instabilité du débit du compresseur, de manière oscillatoire.

De manière générale, il convient d'éviter que ce phénomène ne survienne, car les variations voire les inversions de débit peuvent entrainer des baisses de performance du turboréacteur ou turbopropulseur.

Il est ainsi connu de contrôler le fonctionnement du (ou des) compresseur d'un turboréacteur afin d'éviter de le faire fonctionner dans une plage de points de fonctionnement dans laquelle un pompage surviendrait, ou à proximité de cette plage qu'on appelle également « zone de pompage ». En d'autres termes, pour un débit donné on s'assure que le rapport de pression du compresseur (ou son taux de compression) ne dépasse pas une certaine limite, ou réciproquement, qu'un débit suffisant est présent dans le compresseur selon son rapport de pression ou sa charge. En pratique, on tend à faire fonctionner le compresseur à un rapport de pression admissible maximum, afin d'assurer un bon rendement de la turbomachine.

Dans le cas d'un turboréacteur ou turbopropulseur d'aéronef, la charge du turbocompresseur dépend de la puissance fournie par la turbomachine pour la propulsion de l'aéronef, mais également de prélèvements de puissance mécanique ou d'air, pour d'autres fonctions que la propulsion de l'aéronef.

Les prélèvements peuvent être de deux natures : mécaniques, et/ou d'air.

Un prélèvement (d'énergie) mécanique correspond à un prélèvement de puissance, via une transmission mécanique, au niveau d'un arbre d'entrainement entre une turbine et un compresseur. Cela permet par exemple la génération de puissance hydraulique pour les équipements hydrauliques de l'aéronef, et/ou d'entrainer un ou plusieurs générateurs pour la fourniture de d'énergie électrique.

Le prélèvement d'air (généralement désigné dans le domaine aéronautique par l'expression anglophone « bleed air ») consiste à prélever une part de l'air comprimé par le compresseur afin d'alimenter par exemple les systèmes de dégivrage, le système d'air conditionné, le système de refroidissement de cargaison, le système d'inertage de carburant, et/ou le système de refroidissement interne des moteurs.

Ces prélèvements impactent la marge par rapport à la zone de pompage. Un prélèvement de puissance mécanique, généralement réalisé sur l'arbre haute pression, rapproche le point de fonctionnement du compresseur de la zone de pompage du turboréacteur ou turbopropulseur. Un prélèvement d'air tend essentiellement à augmenter le flux (débit massique d'air) dans le compresseur tandis que l'effet des prélèvements d'air sur le rapport de pression est en général négligeable, ce qui éloigne le point du fonctionnement du compresseur de la zone de pompage.

Le point le plus critique de fonctionnement d'un moteur quant au pompage est à son régime (ou « vitesse ») de ralenti. En effet, au régime le plus faible du moteur, le compresseur est entrainé à faible vitesse et présente certes un faible rapport de pression, mais le flux d'air dans le compresseur est également extrêmement réduit, de sorte qu'un pompage peut se produire à un faible rapport de pression. La marge offerte en termes de rapport de pression au ralenti est donc très faible.

Il y a plusieurs moyens connus pour augmenter la distance et assurer une certaine marge entre le point de fonctionnement d'un moteur d'avion et la zone de pompage. Tout d'abord, le ralenti du moteur peut être augmenté, ce qui augmente la distance entre le point de fonctionnement au ralenti et la zone de pompage, tel que précédemment expliqué. En outre, les moteurs peuvent présenter des soupapes de décharge, situées après le compresseur basse pression ou le compresseur haute pression. L'ouverture de ces soupapes augmente le flux d'air dans le compresseur. Néanmoins, si ces soupapes permettent de maintenir la poussée de la turbomachine à un niveau souhaité, leur usage entraine une augmentation importante de la consommation pour obtenir cette poussée, ainsi qu'un risque de défaillance accru.

Un autre moyen connu, permettant de ne pas impacter trop négativement la marge vis-à-vis de la zone de pompage consiste, dans un turboréacteur comportant un compresseur basse pression, un compresseur intermédiaire et un compresseur haute pression, à prélever la puissance, via une boîte de transmission, au niveau d'un arbre lié au compresseur intermédiaire au lieu d'un arbre lié au compresseur haute pression tel que cela est généralement le cas. Mais cela n'est pas toujours possible, d'autant que de nombreuses turbomachines employées pour la propulsion des aéronefs ne comportent pas d'arbre intermédiaire.

Concernant le ralenti, la solution généralement employée pour définir son régime consiste à prendre en considération le cas de figure le plus défavorable, c'est-à-dire en considérant les prélèvements mécaniques maximums (pour générer une puissance mécanique, électrique ou hydraulique), et des prélèvements d'air minimums. La définition de la vitesse de ralenti prend également en compte la phase d'accélération la plus rapide qui pourrait suivre, et lors de laquelle une augmentation rapide du rapport de pression a lieu alors que le flux n'augmente pas instantanément.

Ainsi, selon une stratégie de pilotage de la turbomachine généralement employée dans un aéronef, la turbomachine est pilotée de sorte que la ligne de fonctionnement de son compresseur (définie par la succession de ses points de fonctionnement), notamment haute pression, conserve une marge de pompage prenant en compte une possible accélération soudaine de la turbomachine, le niveau maximum des besoins en prélèvement mécanique (quitte à fixer un seuil limite à ces besoins), et ne prenant pas en compte les prélèvements d'air (partant de l'hypothèse que ceux-ci peuvent être arrêtés à tout moment). Cela conduit à adopter un régime de ralenti potentiellement élevé.

Le document US2014/0297155 décrit un procédé de gestion d'un moteur d'aéronef dans lequel le niveau des prélèvements mécaniques est continument évalué afin de pouvoir être pris en compte, et corrigé (par limitation de l'autorisation à prélever de la puissance), afin de s'assurer que le moteur peut produire la poussée nécessaire, ou reste dans une plage de température admissible. Ce document prévoit en outre la possibilité de prendre en compte ces prélèvements pour actionner des dispositifs dits « à géométrie variable » du moteur, par exemple des soupapes de guidage de l'air à l'entrée du compresseur, ou des soupapes de décharge. Ce contrôle des moyens à géométrie variable peut être réalisé pour prendre en compte la marge vis-à-vis de la zone de pompage.

Le document EP 2 955 334 décrit un procédé de contrôle d'un compresseur de moteur à turbine dans lequel un point de fonctionnement du compresseur est déterminé, et le flux d'un système contrôlant la pressurisation et la ventilation d'une cabine d'aéronef est modulé pour maintenir le point de fonctionnement du compresseur dans des limites prédéterminées.

Néanmoins, la gestion des turbomachines, notamment pour ce qui concerne les prélèvements réalisés lors du fonctionnement d'un turboréacteur ou turbopropulseur d'aéronef, peut être encore optimisée.

Ainsi, il est proposé dans l'invention un procédé de contrôle des prélèvements d'énergie mécanique et/ou d'air sur une turbomachine de propulsion d'un aéronef, l'aéronef comportant des moyens de prélèvement d'énergie mécanique de la turbomachine pour satisfaire des besoins en prélèvement d'énergie mécanique, et/ou des moyens de prélèvement d'air dans la turbomachine pour satisfaire des besoins en prélèvement d'air, l'aéronef comportant un gestionnaire d'énergie pilotant les prélèvements sur la turbomachine et un système de contrôle de la turbomachine pilotant le fonctionnement de la turbomachine. Le procédé comporte :

- suite à une modification des besoins en prélèvements, l'émission d'une requête en autorisation de modification des prélèvements par le gestionnaire d'énergie à destination du système de contrôle de la turbomachine;
- l'évaluation par le système de contrôle de la turbomachine de la marge de pompage courante de la turbomachine ; et
- si la marge de pompage courante permet la modification des prélèvements sans risque de pompage de la turbomachine, l'émission par le système de contrôle de la turbomachine d'une autorisation de modification des prélèvements à destination du gestionnaire d'énergie, et la modification des prélèvements;
- si la marge de pompage courante ne permet pas la modification des prélèvements sans risque de pompage de la turbomachine, la modification d'un ou plusieurs paramètres de fonctionnement de la turbomachine par le système de contrôle de la turbomachine pour augmenter la marge de pompage, et l'application de mesures temporaires en réponse à la modification des besoins en prélèvements.

L'invention ainsi développée permet une optimisation du fonctionnement d'une turbomachine pour la propulsion d'un aéronef, grâce à un l'emploi d'un protocole de communication entre un gestionnaire d'énergie et un système de contrôle d'une turbomachine d'un aéronef (par exemple avec un gestionnaire de ralenti). Cette communication, selon un protocole de type requête/permission permet d'empêcher une modification des prélèvements sur la turbomachine tant que celle-ci n'est pas sur un point de fonctionnement garantissant l'absence de pompage malgré la modification des prélèvements (et une possible accélération rapide de la turbomachine). Pendant le temps où la modification des prélèvements n'est pas autorisée, des mesures sont prises pour permettre un fonctionnement acceptable des fonctions de l'aéronef.

Ainsi, la marge de pompage en fonctionnement stabilisé peut être inférieure à celle généralement adoptée, sans risque qu'une modification du fonctionnement de la turbomachine ne génère un pompage. Il est ainsi possible de faire fonctionner la turbomachine sur une ligne de fonctionnement plus proche de la zone de pompage, et d'adopter un régime de ralenti plus bas. Cela est bénéfique pour la consommation en carburant de la turbomachine et de l'aéronef qui en est équipé, pour la réduction de la poussée permettant d'améliorer le taux descente, de limiter l'usure des freins au sol, et d'améliorer le contrôle au sol de l'appareil par son pilote, ainsi que pour son niveau d'émission sonore.

Selon un mode de réalisation du procédé, les mesures temporaires comportent la fourniture de tout ou partie des besoins en prélèvement d'énergie mécanique par un tampon permettant le stockage ou la production d'énergie.

Les mesures temporaires peuvent comporter la mise en fonctionnement, ou l'augmentation du besoin en air, ou l'interdiction de l'arrêt de composants consommateurs d'air prélevé.

La modification de paramètres de fonctionnement de la turbomachine peut comporter l'augmentation d'un régime de ralenti de la turbomachine.

Le procédé peut en outre comporter :

- l'évaluation du point de fonctionnement courant de la turbomachine ;
- l'évaluation du prélèvement d'énergie mécanique courant ;
- l'évaluation du prélèvement d'air courant,

la détermination de la marge de pompage courante étant fonction du point de fonctionnement courant de la turbomachine, et des prélèvements courants d'énergie mécanique et d'air.

Les mesures temporaires peuvent comporter une limitation des prélèvements mécaniques par arrêt ou limitation de la puissance de composants augmentant le besoin en prélèvement mécanique, les composants mis à l'arrêt ou dont la puissance est limitée étant choisis selon une liste hiérarchisée préétablie de composants ou de fonctions correspondant à des composants.

Dans un mode de réalisation du procédé, les mesures temporaires sont poursuivies jusqu'à réception par le gestionnaire d'énergie d'une autorisation de modification des prélèvements, ou jusqu'à l'écoulement d'une durée prédéterminée.

Dans un mode de réalisation, du procédé comporte, si une erreur est détectée dans le déroulement du procédé ou si une panne empêche son application, la modification de paramètres de fonctionnement de la turbomachine de sorte à la positionner sur un point de fonctionnement garantissant l'absence de pompage de la turbomachine pour des prélèvements d'énergie mécanique maximums et une absence de prélèvement d'air.

L'invention porte également sur un dispositif de contrôle d'une turbomachine pour la propulsion d'un aéronef, comportant des moyens de prélèvement d'énergie mécanique pour satisfaire des besoins en prélèvement d'énergie mécanique et/ou des moyens de prélèvement d'air pour satisfaire des besoins en prélèvement d'air, et un gestionnaire d'énergie (AEM) pilotant les prélèvements sur la turbomachine et système de contrôle de la turbomachine pilotant le fonctionnement de la turbomachine. Dans le dispositif, le gestionnaire d'énergie est configuré émettre une requête en autorisation de modification des prélèvements à destination du système de contrôle de la turbomachine en cas de modification des besoins en prélèvements. Le système de contrôle de la turbomachine est configuré pour évaluer la marge de pompage courante de la turbomachine, émettre, en réponse à la requête en autorisation de modification des prélèvements, une autorisation de modification des prélèvements à destination du gestionnaire d'énergie, si la marge de pompage courante permet la modification des prélèvements sans risque de pompage de la turbomachine, modifier un ou plusieurs paramètres de fonctionnement de la turbomachine pour augmenter la marge de pompage si la marge de pompage courante ne permet pas la modification des prélèvements sans risque de pompage de la turbomachine. Le gestionnaire d'énergie est configuré pour appliquer des mesures temporaires en réponse à la modification des besoins en prélèvements si la marge de pompage courante ne permet pas la modification des prélèvements sans risque de pompage de la turbomachine.

Un tel dispositif peut en outre comporter un tampon permettant le stockage ou la production d'énergie, et la fourniture de tout ou partie des besoins en prélèvement d'énergie mécanique en tant que mesures temporaires.

Le tampon peut comporter une batterie électrique ou une supercapacité. Le tampon peut comporter une réserve de pression hydraulique. Le tampon peut comporter un groupe auxiliaire de puissance.

Le gestionnaire d'énergie peut être configuré pour mettre en fonctionnement, ou augmenter le besoin en air, ou interdire l'arrêt de composants consommateurs d'air prélevé afin de maximiser les prélèvements d'air en réponse en tant que mesures temporaires.

Le système de contrôle de la turbomachine peut en outre comporter un gestionnaire de ralenti, configuré pour augmenter le ralenti de la turbomachine en tant que modification de paramètres de fonctionnement de la turbomachine.

D'autres particularités et avantages de l'invention apparaîtront encore dans la description ci-après.

Aux dessins annexés, donnés à titre d'exemples non limitatifs :

- la figure 1 représente schématiquement un turboréacteur d'un groupe propulseur d'aéronef et son environnement ;

- la figure 2 illustre sous la forme d'un graphique le fonctionnement d'un compresseur de turbomachine et la notion de zone de pompage ;
- la figure 4 illustre sur un graphique analogue à la figure 2 l'effet d'un prélèvement d'énergie mécanique et d'un prélèvement d'air sur les points de fonctionnement d'un compresseur haute pression de turbomachine et la marge vis-à-vis de la zone de pompage ;
- la figure 5 illustre sous forme de logigramme un exemple de procédé conforme à un mode de réalisation de l'invention ;
- la figure 6 illustre schématiquement un dispositif conforme à un mode de réalisation de l'invention.

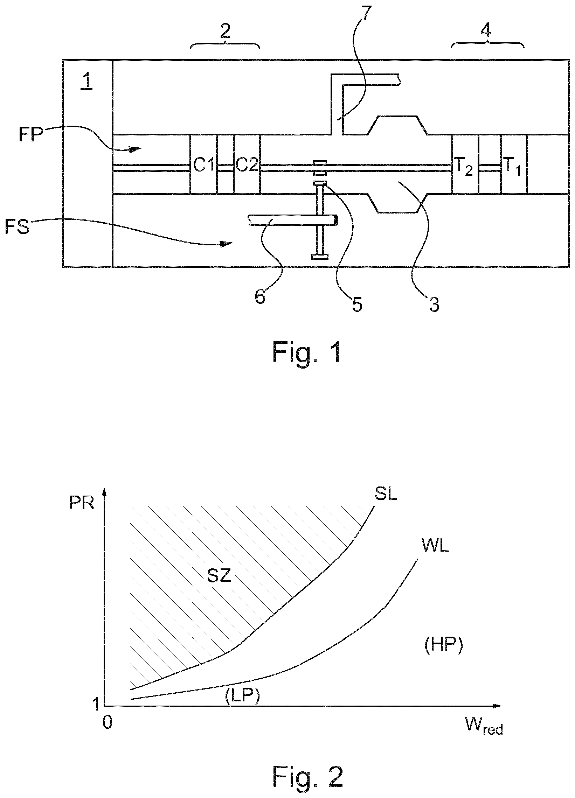

La figure 1 représente selon une vue schématique un turboréacteur pour la propulsion d'un aéronef et son environnement immédiat. Un turboréacteur tel que représenté à la figure 1 comporte une soufflante 1 dont la mise en rotation entraine l'accélération d'un flux d'air divisé entre un flux d'air principal FP et un flux d'air secondaire FS.

Le flux d'air principal FP pénètre dans la turbomachine. L'air du flux principal est mis en pression par un compresseur 2, comportant dans l'exemple représenté respectivement un compresseur basse pression C1 et un compresseur haute pression C2. L'air compressé par le compresseur 2, est mélangé à un carburant (par exemple du kérosène) et entre dans une chambre de combustion 3, où le mélange ainsi formé est enflammé.

L'énergie ainsi libérée est en partie récupérée par une turbine 4 comportant dans l'exemple ici représenté une turbine haute pression T2, et une turbine basse pression T1.

En pratique, la turbine haute pression T2 est liée mécaniquement (par un arbre dit arbre haute pression) au compresseur haute pression C2 qu'elle entraine en rotation. La turbine basse pression T1 est liée mécaniquement (par un arbre dit arbre basse pression) au compresseur basse pression C1 qu'elle entraine en rotation.

La turbine permet également l'entrainement de la soufflante 1.

Tel que précédemment évoqué, deux types de prélèvements peuvent être réalisés sur un tel turboréacteur, à savoir un prélèvement d'énergie mécanique et un prélèvement d'air.

Le prélèvement d'énergie mécanique est réalisé sur un arbre, par exemple l'arbre haute pression, via un dispositif de transmission 5 comportant un réducteur de vitesse, le dispositif de transmission entrainant un arbre de prélèvement 6.

Le prélèvement d'air est réalisé par un piquage, par exemple un piquage 7 en aval du compresseur haute pression (généralement employé lorsque la turbomachine est au ralenti), en amont de toute injection de carburant dans l'air. Cette configuration est présentée à titre illustratif, le piquage d'air pouvant être réalisé en différents points (selon la configuration de la turbomachine d'une part, et son point de fonctionnement d'autre part), par exemple entre différents étages d'un compresseur haute pression, voire en amont de ce dernier.

La figure 2 illustre le fonctionnement d'un compresseur d'une turbomachine, par exemple du turboréacteur à soufflante de la figure 1, sous forme d'un graphique.

En ordonnée est représenté le rapport de pression PR du compresseur, défini comme le rapport entre la pression en sortie et la pression à l'entrée du compresseur, et pouvant être exprimé par l'équation :

$$PR = \frac{P_{Out}}{P_{In}}$$

dans laquelle $P_{in}$ correspond à la pression totale en entrée du compresseur, et $P_{out}$ est la pression totale en sortie du compresseur.

En abscisse est représenté le débit massique corrigé $W_{red}$, c'est-à-dire normalisé en prenant en considération la pression et la température d'entrée de l'air dans le compresseur. Le débit massique corrigé est exprimé par l'équation :

$$W_{red} = W_{in} \cdot \frac{\sqrt{\dfrac{T_{in}}{T_{ref}}}}{\dfrac{P_{in}}{P_{ref}}}$$

dans laquelle $W_{in}$ correspond au débit massique en entrée du compresseur, $T_{in}$ correspond à la température totale en entrée, $T_{ref}$ a une température de référence et $P_{ref}$ à une pression de référence.

Les différents points de fonctionnement du compresseur peuvent ainsi être portés sur le graphique de la figure 2. Dans ce graphique, on peut définir une zone dite zone de pompage SZ, correspondant à l'ensemble des points de fonctionnement du compresseur pour lesquels un phénomène de pompage se produit. Il se produit, comme montré sur la figure 2, lorsqu'un rapport de pression élevé est appliqué à un flux d'air (débit massique d'air) trop faible.

La zone de pompage (représentée hachurée) est ainsi délimitée sur le graphique de la figure 2 par une ligne de pompage SL, correspondant aux points de fonctionnements « limites » pour lesquels un pompage survient si le rapport de pression augmente ou si le flux d'air diminue.

Afin de permettre un fonctionnement fiable de la turbomachine, celle-ci est pilotée de sorte que son compresseur fonctionne selon une ligne de fonctionnement WL suffisamment distante de la zone de pompage. La notion de distance vis-à-vis de la zone de pompage, également appelée marge ou marge de pompage, peut s'exprimer de plusieurs manières, par exemple par la marge en termes de rapport de pression (à débit massique constant) par rapport à la zone de pompage, ou encore par la distance la plus courte (dans l'espace défini par le graphique) entre le point de fonctionnement considéré et la ligne de pompage SL.

Le fonctionnement de la turbomachine à faible débit massique et faible rapport de pression, correspond à un fonctionnement à faible puissance (LP), tandis que le fonctionnement à haut débit massique et grand rapport de pression correspond à un fonctionnement à forte puissance (HP). Comme on le voit à la figure 2, la ligne de fonctionnement WL tend à converger avec la ligne de pompage SL lorsque le débit massique tend vers zéro et le rapport de pression tend vers 1. La vitesse au ralenti de la turbomachine est ainsi déterminée notamment de sorte à garantir une certaine marge de pompage au ralenti.

Comme cela est illustré sur la figure 2, on tend à faire fonctionner le compresseur d'une turbomachine avec une marge suffisante vis-à-vis de la zone de pompage SZ.

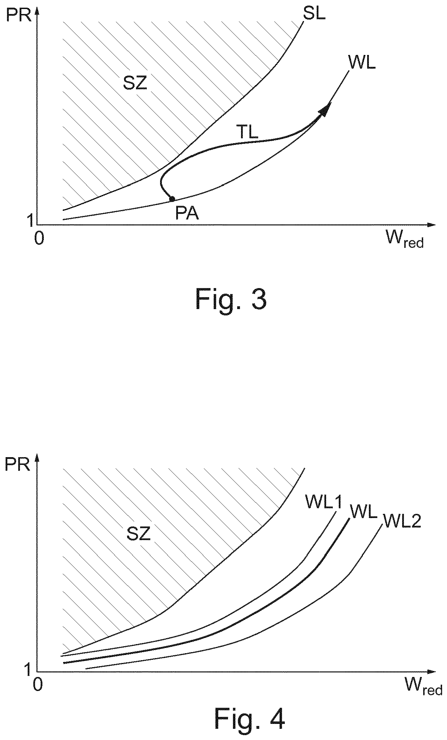

Une telle marge est notamment nécessaire pour éviter le pompage du compresseur lors d'une évolution rapide des prélèvements sur la turbomachine, à savoir une augmentation des prélèvements mécaniques ou une diminution ou un arrêt des prélèvements d'air, ainsi que lors de phases transitoires de fonctionnement de la turbomachine. En effet, la ligne de fonctionnement WL de la turbomachine représentée à la figure 2 correspond aux points de fonctionnement en régime stabilisé. Une accélération de la turbomachine impacte la marge vis-à-vis de la zone de pompage SZ, comme illustré à la figure 3.

La figure 3 est essentiellement identique à la figure 2, mais elle présente également la ligne de fonctionnement du compresseur en transitoire TL lors d'une accélération à partir d'un point de fonctionnement en stabilisé, dit point de début d'accélération PA.

Pendant l'accélération, la ligne de fonctionnement (correspondant à la succession des points de fonctionnement effectifs du compresseur) tend à s'approcher de la ligne de pompage SL, ce qui correspond à une perte temporaire de marge de pompage.

Ainsi, le fait qu'une turbomachine équipant un aéronef puisse être amenée à accélérer rapidement impose de la faire fonctionner, dans les phases de fonctionnement en régime stabilisé, avec une certaine marge vis-à-vis de la zone de pompage pour éviter le pompage lors d'une accélération.

La figure 4 illustre sur un graphique analogue aux figures 2 et 3 l'effet d'un prélèvement d'énergie mécanique et d'un prélèvement d'air sur les points de fonctionnement d'un compresseur de turbomachine et la marge vis-à-vis de la zone de pompage. La figure 4 est essentiellement identique à la figure 2, mais elle présente également une ligne de fonctionnement du compresseur lorsqu'un prélèvement d'énergie mécanique est réalisé sur l'arbre haute pression WL1 et une ligne de fonctionnement du compresseur lorsqu'un prélèvement d'air est réalisé WL2.

Le prélèvement d'air a, comme on le voit sur la figure 4, un effet positif sur la marge de pompage. En effet, la ligne de fonctionnement du compresseur lorsqu'un prélèvement d'air est réalisé WL2 est plus éloignée de la zone de pompage SZ que ne l'est la ligne de fonctionnement WL du compresseur en l'absence de tout prélèvement (d'énergie ou d'air). Le prélèvement d'énergie mécanique a, comme on le voit sur la figure 4, un effet négatif sur la marge de pompage. En effet, la ligne de fonctionnement du compresseur lorsqu'un prélèvement d'énergie est réalisé WL1 est plus proche de la zone de pompage SZ que ne l'est la ligne de fonctionnement WL du compresseur en l'absence de tout prélèvement (d'énergie ou d'air).

Ainsi, l'invention tend à optimiser le pilotage des turbomachines vis-à-vis du phénomène de pompage, notamment lors de leur fonctionnement en transitoire et en régime permanent au ralenti pour éviter une définition du ralenti par rapport à des cas extrêmes tout en garantissant l'absence de risque de pompage.

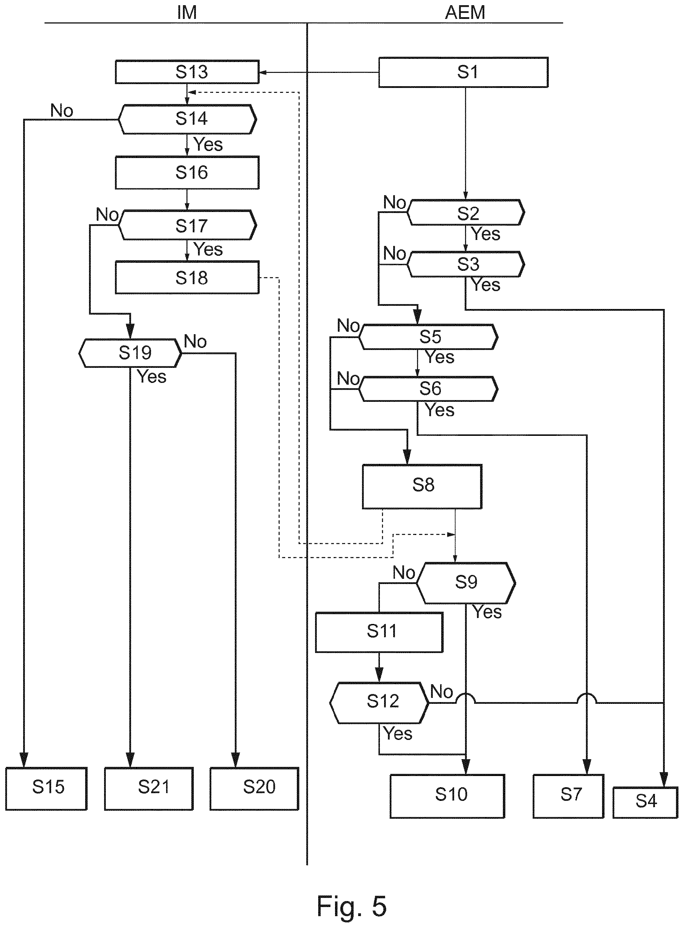

Pour cela, il est proposé un procédé de contrôle d'une turbomachine, dont un exemple pratique de mise en œuvre est illustré à la figure 5.

La figure 5 illustre le pilotage d'une turbomachine telle qu'une turbine à gaz d'un aéronef, en particulier en ce qui concerne la gestion du pompage. Des calculateurs (pouvant être distincts ou constitués physiquement par un seul calculateur) sont employés dans l'exemple de la figure 5, d'une part pour une fonction de gestion de l'énergie, ou gestionnaire d'énergie dit AEM pour « Aircraft Energy Manager » et pour une fonction de gestion du ralenti ou gestionnaire de ralenti dit IM pour « Idle Manager ».

Le gestionnaire de ralenti IM est en charge de la détermination de la vitesse de rotation de la turbomachine au ralenti. Le gestionnaire d'énergie AEM est en charge de piloter les besoins prélèvements, et la façon de les satisfaire.

Dans une première étape S1, les besoins courants en prélèvement d'énergie mécanique et en prélèvement d'air sont déterminés. En d'autres termes, le point de fonctionnement de la machine, défini par exemple dans un espace tel que celui représenté par les figures 2 à 4, est suivi, en continu ou périodiquement (à des espaces temporels prédéterminés ou en réponse à un événement), et on évalue les prélèvements (mécaniques et en air) courants ainsi que les besoins en prélèvements courants.

Dans une étape S2, on évalue si le besoin en prélèvement d'énergie mécanique correspond au prélèvement d'énergie mécanique courant. Une inégalité traduit le changement d'un paramètre de fonctionnement susceptible de rapprocher le point de fonctionnement vers la zone de pompage, ou de l'entrainer dans la zone de pompage de la turbomachine (c'est-à-dire d'au moins un compresseur de la turbomachine). De même, on évalue dans une étape S3 si le besoin en prélèvement d'air courant correspond au prélèvement d'air courant.

Si la réponse à ces deux tests est positive, les besoins en prélèvement sont satisfaits, et aucune mesure n'est prise (étape S4). Dans le cas contraire, on évalue si un indicateur est activé, qui requiert le maintien de prélèvement aussi faible que possible (étape S5). Un tel indicateur peut par exemple être activé en cas de besoins d'accélérations particuliers de la turbomachine ou dans le cas de la sélection d'un mode de fonctionnement dit économique. Le gestionnaire d'énergie AEM évalue également si le besoin en prélèvement mécanique pourrait être réduit (étape S6), et si ces deux tests sont positifs, le gestionnaire d'énergie AEM commande la réduction du prélèvement d'énergie mécanique (étape S7). Si la réponse aux deux tests des étapes S5 et S6 ne sont pas toutes les deux positives, une requête en autorisation de modification des prélèvements d'énergie mécaniques est envoyée à un système de contrôle de la turbomachine (distinct physiquement ou non des calculateurs précités de gestion du ralenti et de gestion de l'énergie) (étape S8).

Dans une étape S9 on évalue, si une autorisation de modification des prélèvements a été reçue par le gestionnaire d'énergie AEM. Cette autorisation, émise par le système de contrôle de la turbomachine, est un préalable nécessaire à la modification des prélèvements appliqués à la turbomachine (à l'exception du cas décrit ci-après dans lequel un temps maximum est écoulé au bout duquel la modification des prélèvements est nécessairement réalisée).

Si cette autorisation a été émise pour le changement de prélèvements prévus, ce qui signifie que la modification des prélèvements peut être effectuée sur le point courant de fonctionnement de la turbomachine sans risquer de pompage, le changement de prélèvement d'énergie mécanique et/ou de prélèvement d'air est effectué, c'est-à-dire que les prélèvements courants sont alignés avec les besoins (étape S10).

Si l'autorisation de changement des prélèvements n'a pas été émise, ce qui signifie que le système de contrôle de la turbomachine estime que la marge de pompage pourrait être trop affectée (ou que la turbomachine pourrait être amenée à un point de fonctionnement dans la zone de pompage), un tampon est employé pour fournir une part des besoins en énergie mécanique (S11). Le tampon est ainsi employé en attendant que l'autorisation de modification des prélèvements soit émise ou qu'un temps suffisant garantissant que la turbomachine a atteint un point de fonctionnement permettant l'application des prélèvements requis sans risque de pompage.

L'une des idées développées dans l'invention consiste ainsi à employer le tampon pour la fourniture de fournir de l'énergie aux consommateurs de l'avion pendant le temps nécessaire au moteur de s'adapter aux besoins de puissance par exemple en augmentant son niveau de ralenti, si la marge au pompage est trop réduite par une évolution des besoins en prélèvements.

Pour ce qui concerne les prélèvements d'air, le tampon naturellement formé par la cabine de l'aéronef (dont on peut choisir de renouveler l'air plus ou moins rapidement dans une certaine limite) peut être employé pour augmenter temporairement les prélèvements d'air. De même, un certain retard dans l'évolution de la fonction de climatisation et/ou renouvellement de l'air de la cabine est acceptable, permettant de différer une baisse des prélèvements d'air pour cette fonction.

Le tampon est employé le temps que la turbomachine atteigne un point de fonctionnement permettant la modification des prélèvements sans risque de pompage, même en cas d'accélération rapide de la turbomachine. En d'autre termes, l'emploi du tampon est poursuivi jusqu'à la réception par le gestionnaire d'énergie d'une autorisation de modification des prélèvements. Néanmoins, l'emploi du tampon ne peut pas être poursuivi indéfiniment et, dans une étape S12, on vérifie l'écoulement d'un temps maximum prédéfini avant modification des prélèvements.

Si ce temps n'est pas atteint, aucune action n'est réalisée (étape S4). Si ce temps est atteint ou dépassé, la modification des prélèvements est ordonnée, et les prélèvements courants sont alignés avec les besoins (étape S10). Dans l'entretemps, la turbomachine aura été placée sur un point de fonctionnement garantissant à coup sûr tout risque de pompage tel que décrit ci-après. Pour cela, on peut en pratique mettre en œuvre deux compteurs en parallèle, le compteur du gestionnaire de ralenti étant d'une durée plus courte que le compteur du gestionnaire d'énergie, ce qui garantit l'atteinte du point de fonctionnement sûr avant l'évolution des prélèvements.

On notera que l'émission d'une autorisation de modification des prélèvements par le système de contrôle de la turbomachine et donc l'évaluation faite à l'étape S9 nécessite la connaissance de la marge de pompage pour le point de fonctionnement courant. La marge de pompage peut être calculée, parallèlement à l'enchainement d'étape précédemment décrit, par exemple par le gestionnaire de ralenti IM dans une étape de détermination de la marge S13, sur le fondement des informations récoltées à l'étape S1 sur le point de fonctionnement courant, les prélèvements courants, et les besoins en prélèvement.

L'étape S13 et les étapes suivantes correspondent aux étapes menées (dans l'exemple de mode de réalisation représenté) au niveau du gestionnaire de ralenti IM afin de dialoguer avec le gestionnaire d'énergie AEM et le cas échéant de modifier la vitesse de ralenti pour augmenter la marge de pompage.

Dans une étape S14, on détermine si une requête de changement des prélèvements a été émise (par exemple à l'étape S8).

Si aucune requête de changement des prélèvements n'a été émise, aucune action n'est commandée et le ralenti est inchangé (étape S15). Si une requête de changement des prélèvements a été émise, un compteur est incrémenté (étape S16), permettant la vérification du le bon déroulement du procédé.

Par ailleurs, dans le cas d'une requête en modification tendant à augmenter la marge de pompage par rapport à la situation courante, le régime de la turbomachine peut être décéléré en conséquence sans mettre en œuvre les étapes décrites ci-après.

La marge de pompage résultant de l'application du changement de prélèvements est ensuite comparée à un seuil, exprimé par exemple sous la forme d'une marge minimale (étape S17). Si la marge est supérieure au seuil prédéterminé, une autorisation de modification est envoyée au calculateur de gestion de l'énergie dans une étape S18 (ce qui, dans l'exemple de mode de réalisation ici représenté, permet la réalisation de l'étape S9).

Si la marge de pompage est inférieure au seuil, de sorte qu'un risque de pompage existerait si la modification des prélèvements était autorisée, le régime de ralenti de la turbomachine est accéléré. (étape S20). Cela est poursuivi jusqu'à ce que la marge de pompage sur le point courant de la turbomachine soit suffisante pour garantir une absence de pompage malgré la modification requise des prélèvements, et même si une accélération subite de la turbomachine était commandée.

Néanmoins, le temps pendant lequel le système de contrôle de la turbomachine demande à l'avion de ne pas modifier les prélèvements (par l'absence d'autorisation à le faire) ne peut être infini. Corolairement, l'emploi du tampon pour fournir une partie des besoins en prélèvements ne peut être poursuivi infiniment. Ainsi, un temps maximal est prédéterminé, au-delà duquel le système de contrôle de la turbomachine doit autoriser, nécessairement, la modification des prélèvements.

Aussi, avant l'écoulement du temps maximal prédéterminé (contrôlé à l'étape S19) (ou si une erreur est détectée dans le déroulement du procédé ou une panne est détectée empêchant la mise en œuvre normale du procédé), la turbomachine est amenée à un point de fonctionnement par défaut, auquel correspond un régime de ralenti prédéfini. Ce point par défaut est dit « sûr » vis-à-vis du phénomène de pompage en ce qu'il permet à la fois d'assurer les besoins en prélèvements mécaniques maximum, de permettre un arrêt des prélèvements d'air, et de permettre une accélération maximale de la turbomachine tout en garantissant l'absence de pompage (étape S21). Ce point de fonctionnement sûr vis-à-vis du pompage est également employé si une erreur quelconque est détectée pendant la mise en œuvre du procédé (par exemple lors de la détermination de la marge de pompage), ou une perte temporaire ou permanente de communication entre le gestionnaire d'énergie et le système de contrôle de la turbomachine (par exemple avec le gestionnaire de ralenti), de sorte à garantir l'absence de pompage en cas d'incertitude.

Un tel procédé peut être complété par une limitation des prélèvements mécaniques. Cette limitation peut être obtenue par arrêt ou limitation de la puissance de composants augmentant le besoin en prélèvement mécanique. Afin de choisir les composants impacté, une liste hiérarchisée de composants ou de fonctions correspondant à des composants peut être établie et employée (on impacte préférentiellement en premier les composants peu importants pour la bonne marche ou le confort de l'aéronef).

Un tel procédé peut aussi être complété par une gestion des prélèvements d'air, par exemple en permettant de maintenir ou d'augmenter les prélèvements d'air en phase de fonctionnement transitoire de la turbomachine (en profitant par exemple du tampon en matière de stockage d'air offert par la cabine de l'aéronef, ou par des moyens de stockage dédiés), ce qui augmente la marge de pompage.

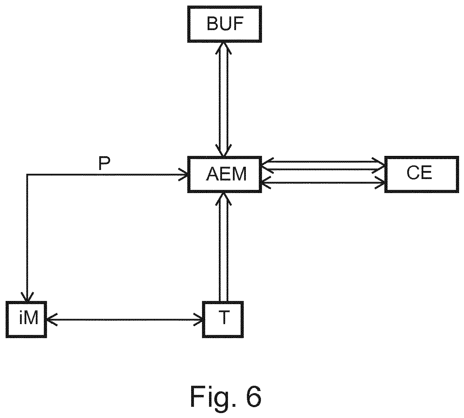

La figure 6 présente de manière schématique un dispositif de contrôle d'une turbomachine T d'un aéronef, selon un mode de réalisation de l'invention. On a représenté par des flèches doubles un transfert d'énergie ou d'air, et par des flèches simples un transfert de données (informations, instructions).

La turbomachine T, pouvant être du type de celle représentée à la figure 1, comporte des moyens de prélèvement d'énergie mécanique et des moyens de prélèvement d'air

Le dispositif comporte en outre un tampon BUF. Le tampon BUF permet le stockage ou la production d'énergie (sans augmenter la puissance de la turbomachine ou générer de poussée additionnelle). On entend par production d'énergie par exemple la production d'énergie électrique par conversion de l'énergie chimique du kérosène, le tampon pouvant être un générateur. Le tampon BUF peut comporter un moyen de stockage d'énergie électrique (batterie, supercondensateur / supercapacité, etc.) ou d'énergie hydraulique (comme un accumulateur de pression) ou mécanique (stockage inertiel, d'énergie potentielle, etc. ; le tampon peut comporter un générateur auxiliaire (généralement désigné par l'acronyme anglophone « APU ») qui est généralement employé au sol par l'aéronef pour générer de l'électricité.

Le dispositif comporte également un gestionnaire d'énergie AEM et un gestionnaire de ralenti IM. Le gestionnaire d'énergie AEM a notamment la fonction de piloter les prélèvements réalisés sur la turbomachine. Le gestionnaire de ralenti IM est un élément d'un système de contrôle de la turbomachine T, qui en pilote et en suit le point de fonctionnement Le système de contrôle de la turbomachine, par exemple via le gestionnaire de ralenti IM permet également de suivre la marge de pompage, c'est-à-dire la marge par rapport à une zone de pompage SZ.

Le gestionnaire d'énergie AEM et le gestionnaire de ralenti IM communiquent afin d'autoriser ou non la modification des prélèvements sur la turbomachine. Cette communication correspond à la mise en œuvre d'un protocole P, qui peut par exemple être le protocole représenté à la figure 5. Ainsi, en réponse à une requête en modification des prélèvements émis par le gestionnaire d'énergie AEM, cette modification peut être autorisée après s'être assuré que la turbomachine est sur un point de fonctionnement garantissant l'absence de pompage. Si le point de fonctionnement courant de la turbomachine ne permet pas la modification requise des prélèvements, la turbomachine son régime de ralenti est augmenté. Pendant ce temps, au moins une part des besoins en prélèvement d'énergie mécanique d'éléments consommateurs CE d'énergie alimentés généralement par les seuls prélèvements d'énergie mécanique sont assurés par le tampon BUF.

L'invention ainsi développée permet une optimisation du fonctionnement d'une turbomachine pour la propulsion d'un aéronef, grâce à un l'emploi d'un protocole de communication entre un gestionnaire d'énergie et un gestionnaire de ralenti (ou plus généralement un système de contrôle d'une turbomachine d'un aéronef. Cette communication permet d'empêcher une modification des prélèvements sur la turbomachine tant que celle-ci n'est pas sur un point de fonctionnement garantissant l'absence de pompage malgré la modification des prélèvements (et une possible accélération rapide de la turbomachine). Pendant le temps où la modification des prélèvements n'est pas autorisée, un tampon (stockeur ou générateur d'énergie) peut être employé pour la fourniture d'énergie dans les phases de fonctionnement de la turbomachine susceptibles de générer un phénomène de pompage. L'emploi du tampon permet de satisfaire temporairement tout ou partie des besoins en énergie généralement satisfaits entièrement par le prélèvement d'énergie mécanique au niveau de la turbomachine.

Dans certaines variantes de l'invention, les prélèvements sont envisagés de manière globale, en incluant les prélèvements d'air, qui sont bénéfiques pour la marge de pompage.

## Revendications

1. Procédé de contrôle des prélèvements d'énergie mécanique et/ou d'air sur une turbomachine (T) de propulsion d'un aéronef, l'aéronef comportant des moyens de prélèvement d'énergie mécanique de la turbomachine (T) pour satisfaire des besoins en prélèvement d'énergie mécanique, et/ou des moyens de prélèvement d'air dans la turbomachine (T) pour satisfaire des besoins en prélèvement d'air, l'aéronef comportant un gestionnaire d'énergie (AEM) pilotant les prélèvements sur la turbomachine et un système de contrôle de la turbomachine (T) pilotant le fonctionnement de la turbomachine (T) ;
ledit procédé comportant :

- suite à une modification des besoins en prélèvements, l'émission d'une requête en autorisation de modification des prélèvements (S8) par le gestionnaire d'énergie (AEM) à destination du système de contrôle de la turbomachine;
- l'évaluation par le système de contrôle de la turbomachine de la marge de pompage courante (S13) de la turbomachine (T);
et
- si la marge de pompage courante permet la modification des prélèvements sans risque de pompage de la turbomachine (T), l'émission par le système de contrôle de la turbomachine d'une autorisation de modification des prélèvements (S18) à destination du gestionnaire d'énergie (AEM), et la modification des prélèvements (S10);
- si la marge de pompage courante ne permet pas la modification des prélèvements sans risque de pompage de la turbomachine (T), la modification d'un ou plusieurs paramètres de fonctionnement de la turbomachine (T) par le système de contrôle de la turbomachine (T) pour augmenter la marge de pompage, et l'application de mesures temporaires en réponse à la modification des besoins en prélèvements.

2. Procédé selon la revendication 1, dans lequel les mesures temporaires comportent la fourniture de tout ou partie des besoins en prélèvement d'énergie mécanique par un tampon (BUF) permettant le stockage ou la production d'énergie (S11).

3. Procédé selon la revendication 1 ou la revendication 2, dans lequel les mesures temporaires comportent, la mise en fonctionnement, ou l'augmentation du besoin en air, ou l'interdiction de l'arrêt de composants consommateurs d'air prélevé.

4. Procédé selon l'une des revendications précédentes, dans lequel la modification de paramètres de fonctionnement de la turbomachine (T) comporte l'augmentation d'un régime de ralenti de la turbomachine (S20).

5. Procédé selon l'une des revendications précédentes, comportant en outre :

- l'évaluation du point de fonctionnement courant de la turbomachine (T) ;
- l'évaluation du prélèvement d'énergie mécanique courant; et
- l'évaluation du prélèvement d'air courant (S1) ;

et dans lequel la détermination de la marge de pompage courante est fonction du point de fonctionnement courant de la turbomachine (T), et des prélèvements courant d'énergie mécanique et d'air.

6. Procédé selon l'une quelconque des revendications précédentes, dans lequel les mesures temporaires comportent une limitation des prélèvements mécaniques (S7) par arrêt ou limitation de la puissance de composants augmentant le besoin en prélèvement mécanique, les composants mis à l'arrêt ou dont la puissance est limitée étant choisis selon une liste hiérarchisée préétablie de composants ou de fonctions correspondant à des composants.

**7.** Procédé selon l'une des revendications précédentes, **caractérisé en ce que** les mesures temporaires sont poursuivies jusqu'à réception par le gestionnaire d'énergie (AEM) d'une autorisation de modification des prélèvements, ou jusqu'à l'écoulement d'une durée prédéterminée.

**8.** Procédé selon l'une des revendications précédentes, comprenant, si une erreur est détectée dans le déroulement du procédé ou si une panne empêche son application, la modification de paramètres de fonctionnement de la turbomachine (T) de sorte à la positionner sur un point de fonctionnement garantissant l'absence de pompage de la turbomachine (T) (S21) pour des prélèvements d'énergie mécanique maximums et une absence de prélèvement d'air.

**9.** Dispositif de contrôle d'une turbomachine (T) pour la propulsion d'un aéronef, comportant

- des moyens de prélèvement d'énergie mécanique pour satisfaire des besoins en prélèvement d'énergie mécanique et/ou des moyens de prélèvement d'air pour satisfaire des besoins en prélèvement d'air,
- un gestionnaire d'énergie (AEM) pilotant les prélèvements sur la turbomachine et un système de contrôle de la turbomachine (T) pilotant le fonctionnement de la turbomachine (T);

**caractérisé en ce que** :

- le gestionnaire d'énergie (AEM) est configuré pour émettre une requête en autorisation de modification des prélèvements à destination du système de contrôle de la turbomachine en cas de modification des besoins en prélèvement,
- le système de contrôle de la turbomachine est configuré pour :

• évaluer la marge de pompage courante de la turbomachine (T) ;
• émettre, en réponse à la requête en autorisation de modification des prélèvements, une autorisation de modification des prélèvements à destination du gestionnaire d'énergie, si la marge de pompage courante permet la modification des prélèvements sans risque de pompage de la turbomachine (T); et
• modifier un ou plusieurs paramètres de fonctionnement de la turbomachine (T) pour augmenter la marge de pompage si la marge de pompage courante ne permet pas la modification des prélèvements sans risque de pompage de la turbomachine (T);

- le gestionnaire d'énergie (AEM) est configuré pour appliquer des mesures temporaires en réponse à la modification des besoins en prélèvements si la marge de pompage courante ne permet pas la modification des prélèvements sans risque de pompage de la turbomachine (T).

**10.** Dispositif selon la revendication 9 comportant en outre un tampon (BUF) permettant le stockage ou la production d'énergie, et la fourniture de tout ou partie des besoins en prélèvement d'énergie mécanique en tant que mesures temporaires.

**11.** Dispositif selon la revendication 10, dans lequel le tampon (BUF) comporte une batterie électrique ou une supercapacité.

**12.** Dispositif selon la revendication 10 ou la revendication 11, dans lequel le tampon (BUF) comporte une réserve de pression hydraulique.

**13.** Dispositif selon l'une des revendications 10 à 12, dans lequel le tampon (BUF) comporte un groupe auxiliaire de puissance.

**14.** Dispositif selon l'une des revendications 9 à 13, dans lequel le gestionnaire d'énergie est en outre configuré pour mettre en fonctionnement, ou augmenter le besoin en air, ou interdire l'arrêt de composants consommateurs d'air prélevé afin de maximiser les prélèvements d'air en réponse en tant que mesures temporaires.

**15.** Dispositif selon l'une des revendications 9 à 14, dans lequel le système de contrôle de la turbomachine (T) comporte en outre un gestionnaire de ralenti (IM), configuré pour augmenter le ralenti de la turbomachine (T) en tant que modification de paramètres de fonctionnement de la turbomachine (T).

**Patentansprüche**

**1.** Verfahren zur Steuerung der Entnahmen von mechanischer Energie und/oder von Luft an einer Turbomaschine (T) des Antriebs eines Flugzeugs, wobei das Flugzeug Einrichtungen zur Entnahme von mechanischer Energie der Turbomaschine (T) zur Deckung von Bedarfen an Entnahme von mechanischer Energie und/oder Einrichtungen zur Entnahme von Luft in der Turbomaschine (T) zur Deckung von Luftentnahmebedarfen umfasst, wobei das Flugzeug einen Energiemanager (AEM), der die Entnahmen an der Turbomaschine steuert, und ein Steuerungssystem der Turbomaschine (T), das den Betrieb der Turbomaschine (T) steuert, umfasst; wobei das Verfahren umfasst:

- nach einer Änderung der Entnahmebedarfe das Senden einer Entnahmeänderungsfreigabeanforderung (S8) durch den Energiemanager (AEM) an das Steuerungssystem der Turbomaschine;
- das Bewerten des aktuellen Pumpgrenzabstands (S13) der Turbomaschine (T) durch das Steuerungssystem der Turbomaschine; und
- wenn der aktuelle Pumpgrenzabstand das Ändern der Entnahmen ohne Pumprisiko der Turbomaschine (T) ermöglicht, das Senden einer Entnahmeänderungsfreigabe (S18) durch das Steuerungssystem der Turbomaschine an den Energiemanager (AEM) und das Ändern der Entnahmen (S10) ;
- wenn der aktuelle Pumpgrenzabstand das Ändern der Entnahmen ohne Pumprisiko der Turbomaschine (T) nicht ermöglicht, das Ändern eines oder mehrerer Betriebsparameter der Turbomaschine (T) durch das Steuerungssystem der Turbomaschine (T), um den Pumpgrenzabstand zu erhöhen, und das Anwenden von vorübergehenden Maßnahmen als Reaktion auf die Änderung der Entnahmebedarfe.

2. Verfahren nach Anspruch 1, bei dem die vorübergehenden Maßnahmen die Bereitstellung der gesamten oder eines Teils der Bedarfe an Entnahme mechanischer Energie durch einen Puffer (BUF) umfassen, der die Speicherung oder Erzeugung von Energie (S11) ermöglicht.

3. Verfahren nach Anspruch 1 oder Anspruch 2, bei dem die vorübergehenden Maßnahmen das Zuschalten oder die Erhöhung des Luftbedarfs oder das Unterbinden der Abschaltung von Komponenten, die entnommene Luft verbrauchen, umfasst.

4. Verfahren nach einem der vorhergehenden Ansprüche, bei dem das Ändern der Betriebsparameter der Turbomaschine (T) die Erhöhung der Leerlaufdrehzahl der Turbomaschine (S20) umfasst.

5. Verfahren nach einem der vorhergehenden Ansprüche, das ferner umfasst:

- das Bewerten des aktuellen Betriebspunktes der Turbomaschine (T);
- das Bewerten der aktuellen Entnahme von mechanischer Energie und
- das Bewerten der aktuellen Luftentnahme (S1);

und bei dem die Bestimmung des aktuellen Pumpgrenzabstands vom aktuellen Betriebspunkt der Turbomaschine (T) und von den aktuellen Entnahmen von mechanischer Energie und von Luft abhängig ist.

6. Verfahren nach einem der vorhergehenden Ansprüche, bei dem die vorübergehenden Maßnahmen eine Begrenzung der mechanischen Entnahmen (S7) durch Abschaltung oder Leistungsbegrenzung von Komponenten, die den Bedarf an mechanischer Entnahme erhöhen, umfassen, wobei die abgeschalteten oder leistungsbegrenzten Komponenten anhand einer zuvor erstellten hierarchisierten Liste von Komponenten oder von Komponenten entsprechenden Funktionen gewählt werden.

7. Verfahren nach einem der vorhergehenden Ansprüche, **dadurch gekennzeichnet, dass** die vorübergehenden Maßnahmen bis zum Empfangen einer Entnahmeänderungsfreigabe durch den Energiemanager (AEM) oder bis zum Ablauf einer vorbestimmten Zeitdauer fortgesetzt werden.

8. Verfahren nach einem der vorhergehenden Ansprüche, das, wenn ein Fehler im Ablauf des Verfahrens festgestellt wird oder wenn ein Ausfall seine Anwendung verhindert, das Ändern der Betriebsparameter der Turbomaschine (T) derart umfasst, dass sie auf einen Betriebspunkt gesetzt wird, der das Nichtvorliegen von Pumpen der Turbomaschine (T) (S21) bei maximalen Entnahmen von mechanischer Energie und einem Nichtvorliegen von Luftentnahmen garantiert.

9. Vorrichtung zur Steuerung einer Turbomaschine (T) des Antriebs eines Flugzeugs, umfassend

- Einrichtungen zur Entnahme von mechanischer Energie zur Deckung von Bedarfen an Entnahme von mechanischer Energie und/oder Einrichtungen zur Entnahme von Luft zur Deckung von Luftentnahmebedarfen,
- einen Energiemanager (AEM), der die Entnahmen an der Turbomaschine steuert, und ein Steuerungssystem der Turbomaschine (T), das den Betrieb der Turbomaschine (T) steuert;

**dadurch gekennzeichnet, dass**:

- der Energiemanager (AEM) dazu ausgestaltet ist, im Fall einer Änderung der Entnahmebedarfe eine Entnahmeänderungsfreigabeanforderung an das Steuerungssystem der Turbomaschine zu senden,
- das Steuerungssystem der Turbomaschine dazu ausgestaltet ist:

- den aktuellen Pumpgrenzabstand der Turbomaschine (T) zu bewerten;
- als Reaktion auf die Entnahmeänderungsfreigabeanforderung eine Entnahmeänderungsfreigabe an den Energiemanager zu senden, wenn der aktuelle Pumpgrenzabstand das Ändern der Entnahmen ohne Pumprisiko der Turbomaschine (T) ermöglicht, und
- einen oder mehrere Betriebsparameter der Turbomaschine (T) zu ändern, um den Pumpgrenzabstand zu erhöhen, wenn der aktuelle Pumpgrenzabstand das Ändern der Entnahmen ohne Pumprisiko der Turbomaschine (T) nicht ermöglicht;

- der Energiemanager (AEM) dazu ausgestaltet ist, als Reaktion auf die Änderung der Entnahmebedarfe vorübergehende Maßnahmen anzuwenden, wenn der aktuelle Pumpgrenzabstand das Ändern der Entnahmen ohne Pumprisiko der Turbomaschine (T) nicht ermöglicht.

**10.** Vorrichtung nach Anspruch 9, umfassend ferner einen Puffer (BUF), der das Speichern oder Erzeugen von Energie und das Bereitstellen der gesamten oder eines Teils der Bedarfe an Entnahme von mechanischer Energie als vorübergehende Maßnahmen ermöglicht.

**11.** Vorrichtung nach Anspruch 10, bei welcher der Puffer (BUF) eine elektrische Batterie oder eine Superkapazität umfasst.

**12.** Vorrichtung nach Anspruch 10 oder Anspruch 11, bei welcher der Puffer (BUF) einen Hydraulikdruckvorrat umfasst.

**13.** Vorrichtung nach einem der Ansprüche 10 bis 12, bei welcher der Puffer (BUF) ein Leistungshilfsaggregat umfasst.

**14.** Vorrichtung nach einem der Ansprüche 9 bis 13, bei welcher der Energiemanager ferner dazu ausgestaltet ist, Komponenten, die entnommene Luft verbrauchen, zuzuschalten oder ihren Luftbedarf zu erhöhen oder ihre Abschaltung zu unterbinden, um als Reaktion als vorübergehende Maßnahmen die Luftentnahmen zu maximieren.

**15.** Vorrichtung nach einem der Ansprüche 9 bis 14, bei welcher das Steuerungssystem der Turbomaschine (T) ferner einen Leerlaufmanager (IM) umfasst, der dazu ausgestaltet ist, den Leerlauf der Turbomaschine (T) als Änderung von Betriebsparametern der Turbomaschine (T) zu erhöhen.

**Claims**

**1.** Method for controlling takeoffs of mechanical energy and/or of air on a turbine engine (T) for the propulsion of an aircraft, the aircraft including means for taking off mechanical energy of the turbine engine (T) in order to satisfy the requirements for the taking off of mechanical energy, and/or means for taking off air in the turbine engine (T) in order to satisfy the requirements for taking off of air, the aircraft including an energy manager (AEM) controlling the takeoff performed on the turbine engine and a system for controlling the turbine engine (T) controlling the operation of the turbine engine (T);
said method comprising:

- following a modification of the requirements for takeoff, the issue of a request for an authorisation for the modification of the takeoffs (S8) by the energy manager (AEM) to the system for controlling the turbine engine;
- the assessment by the system for controlling the turbine engine of the current surge margin (S13) of the turbine engine (T); and
- if the current surge margin permits the modification of the takeoffs without the risk of surge of the turbine engine (T), the issue by the system for controlling the turbine engine of an authorisation for the modification of the takeoffs (S18) to the energy manager (AEM), and the modification of the takeoffs (S10) ;
- if the current surge margin does not permit the modification of the takeoffs without the risk of surge of the turbine engine (T), the modification of one or a plurality of operating parameters of the turbine engine (T) by the system for controlling the turbine engine (T) in order to increase the surge margin, and the application of temporary measures in response to the modification of the requirements for takeoff.

**2.** Method according to claim 1, in which the temporary measures include the supply of all or part of the requirements for the taking off of mechanical energy by a buffer (BUF) permitting the storage or the production of energy (S11).

**3.** Method according to claim 1 or claim 2, in which the temporary measures include putting into operation, or increasing the requirement for air, or preventing the stopping of components that are consumers of taken off air.

**4.** Method according to one of the preceding claims, in which the modification of operating parameters of the turbine engine (T) includes increasing an idling speed of the turbine engine (S20).

**5.** Method according to one of the preceding claims including, in addition:

- the assessment of the current point of operation of the turbine engine (T);
- the assessment of the current takeoff of mechanical energy; and
- the assessment of the current takeoff of air (S1) ;

and in which the determination of the current surge margin is a function of the current point of operation of the turbine engine (T), and of the current takeoffs of mechanical energy and of air.

**6.** Method according to any one of the preceding claims, in which the temporary measures include a limitation of the mechanical takeoffs (S7) by the interruption or limitation of the power of components increasing the requirement for mechanical takeoffs, the components that are brought to a stop or of which the power is limited being selected according to a preestablished prioritised list of components or of functions corresponding to the components.

**7.** Method according to one of the preceding claims, **characterised in that** the temporary measures continue to be implemented until the receipt by the energy manager (AEM) of an authorisation for the modification of the takeoffs, or until the passage of a predetermined period.

**8.** Method according to one of the preceding claims, comprising, if an error is detected in the progression of the method or if a malfunction prevents its application, the modification of operating parameters of the turbine engine (T) so as to position it at a point of operation guaranteeing the absence of surge of the turbine engine (T) (S21) for maximum takeoffs of mechanical energy and the absence of a takeoff of air.

**9.** Device for controlling a turbine engine (T) for the propulsion of an aircraft, including

- means for taking off mechanical energy in order to satisfy the requirements for the takeoffs of mechanical energy and/or means for taking off of air in order to satisfy the requirements for taking off of air,
- an energy manager (AEM) controlling the offtakes on the turbine engine and a system for controlling the turbine engine (T) controlling the operation of the turbine engine (T);

**characterised in that**:

- the energy manager (AEM) is configured so as to issue a request for an authorisation for the modification of the offtakes to the system for controlling the turbine engine in the case of modification of the requirements for takeoff,
- the system for controlling the turbine engine is configured:

• to assess the current surge margin of the turbine engine (T),
• to issue, in response to the request for an authorisation for the modification of the takeoffs, an authorisation for the modification of the takeoffs to the energy manager, if the current surge margin permits the modification of the takeoffs without the risk of surge of the turbine engine (T); and
• to modify one or a plurality of operating parameters of the turbine engine (T) in order to increase the surge margin if the current surge margin does not permit the modification of the takeoffs without the risk of surge of the turbine engine (T);

- the energy manager (AEM) is configured to apply temporary measures in response to the modification of the requirements for takeoffs if the current surge margin does not permit the modification of the takeoffs without the risk of surge of the turbine engine (T).

**10.** Device according to claim 9 including in addition a buffer (BUF) permitting the storage or the production of energy, and the supply of all or part of the requirements for the taking off of mechanical energy as temporary measures.

**11.** Device according to claim 10, in which the buffer (BUF) includes an electrical battery or a supercapacitor.

**12.** Device according to claim 10 or claim 11, in which the buffer (BUF) includes a hydraulic pressure reserve.

**13.** Device according to one of claims 10 to 12, in which the buffer (BUF) includes an auxiliary power unit.

**14.** Device according to one of claims 9 to 13, in which the energy manager is additionally configured to put into operation, or to increase the requirement for air, or to prevent the stopping of components that are consumers of taken off air in order to maximise the takeoffs of air in response as temporary measures.

**15.** Device according to one of claims 9 to 14, in which the system for controlling the turbine engine (T) additionally includes an idle manager (IM), configured in order to increase the idling of the turbine engine (T) as a modification of operating parameters of the turbine engine (T).

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140297155 A
- EP 2955334 A